# NEUE EUROPÄISCHE PATENTSCHRIFT

(11) **EP 2 390 123 B2**
(45) Veröffentlichungstag und Bekanntmachung des Hinweises auf die Entscheidung über den Einspruch: **01.08.2018**
(45) Hinweis auf die Patenterteilung: 26.08.2015
(21) Anmeldenummer: 11164362.3
(22) Anmeldetag: 29.04.2011
(51) Int. Cl.: B60H 1/00

(54) **Anlage zur Steuerung wenigstens zweier Luftströme**
Assembly for controlling at least two air flows
Installation de commande d'au moins deux flux d'air

(30) Priorität: 26.05.2010 DE 102010029297
(43) Veröffentlichungstag der Anmeldung: 30.11.2011
(73) Patentinhaber: MAHLE Behr GmbH & Co. KG, 70469 Stuttgart (DE)
(72) Erfinder: Kullen, Philipp, 70191, Stuttgart (DE)
(74) Vertreter: Grauel, Andreas

(56) Entgegenhaltungen:
- EP-A1- 2 030 818
- FR-A1- 2 778 151
- FR-A1- 2 798 322
- FR-A1- 2 879 510

## Beschreibung

Die Erfindung betrifft eine Anlage zur Steuerung wenigstens zweier Luftströme mittels wenigstens einer Schenkelklappe und wenigstens einer Trommelklappe.

Derartige Anlagen zur Steuerung wenigstens zweier Luftströme sind meist in Klimaanlagen vorgesehen und können beispielsweise dazu dienen, einen Defrost-Luftstrom und einen Diffus-Luftstrom zu steuern. Dabei sind für die Klappen nach dem Stande der Technik jeweils eigene Antriebe oder Kinematiken vorgesehen, so dass die Klappen individuell wie gewünscht gesteuert werden können.

Dokument FR-A-2778151 offenbart eine Anlage gemäß das erste Teil des Anspruchs 1.

Es ist Aufgabe der Erfindung, eine Anlage zur Steuerung wenigstens zweier Luftströme mittels wenigstens einer Schenkelklappe und wenigstens einer Trommelklappe anzugeben, welche es bei möglichst geringem baulichen Aufwand gestattet, für die Luftströme jeweils Öffnungen gewünschter Größe zu bieten, die gegebenenfalls auch voneinander abweichen können.

Diese Aufgabe ist für eine Anlage der eingangs genannten Art durch die Merkmalen des kennzeichnenden Teil des Anspruchs 1 gelöst.

Ein derartiger gemeinsamer Antrieb vermindert den baulichen Aufwand zur Steuerung der beiden Klappen erheblich und gestattet es dennoch, zwei Luftströme unabhängig voneinander mittels der beiden Klappen zu steuern bzw. für die Luftströme unterschiedliche Öffnungen mittels der Klappen zur Verfügung zu stellen.

Dabei sind die Klappen, wie gemäß einer Ausgestaltung der Erfindung vorgesehen ist, vorteilhafterweise so ausgebildet, dass sie in der Mehrzahl der mittels des Antriebs anfahrbaren Winkelposition jeweils differierend große Öffnungen für die jeweiligen Luftströme bieten. Somit können die beiden Luftströme in jeweils unterschiedlichem Maße beeinflusst werden, obwohl die beiden Klappen mit jeweils gleichen Winkelpositionen bewegt werden bzw. sich in jeweils gleichen Winkelpositionen befinden.

Nach der Erfindung weist die Trommelklappe wenigstens zwei offene, luftführende Bereiche auf. Diese Bereiche können sich beispielsweise mehr oder weniger gegenüberliegen und somit je nach Winkelposition der Trommelklappe eine verschieden große Gesamtöffnung für den die Trommelklappe durchströmenden Luftstrom bieten. Somit kann der Öffnungsgrad der Trommelklappe in Abhängigkeit ihrer Winkelstellung variiert werden und ggf. von dem Öffnungsgrad der Schenkelklappe abweichen.

Um die die beiden Klappen durchströmenden Luftströme jeweils in verschiedener Weise steuern zu können, ist gemäß der Erfindung vorgesehen, dass die offenen, luftführenden Bereiche der Trommelklappe melklappe so ausgebildet und angeordnet sind, dass bei den verschiedenen Winkelstellungen der beiden Klappen der Öffnungsgrad der Trommelklappe und der Öffnungsgrad der Schenkelklappe jeweils Voneinander abweichen. Somit gestattet es die Anlage, mittels der beiden Klappen die beiden zu steuernden Luftströme jeweils verschieden zu steuern, obwohl für die beiden Klappen ein gemeinsamer Antrieb vorgesehen ist und die beiden Klappen sich jeweils in gleicher Winkelposition befinden.

Vorzugsweise ist, wie gemäß einer weiteren Ausgestaltung der Erfindung vorgesehen ist, der Öffnungswinkel der beiden Klappen gleich groß gewählt und beträgt vorzugsweise etwa 75 Grad. Eine Abweichung der Öffnungswinkel von +/-10 Grad wird in diesem Zusammenhang ebenfalls als etwa gleich groß erachtet.

Dabei sind die Winkel zwischen einer Lufteinlass- und einer Luftauslassöffnung der Trommelklappe weiter vorteilhaft größer als der halbe Öffnungswinkel der Schenkelklappen zu wählen, da auf diese Weise möglichst viele Öffnungszustände der Klappen verwirklicht werden können.

Für eine weitere Vereinfachung des Aufbaus können die Klappen vorteilhaft, wie gemäß einer weiteren Ausgestaltung der Erfindung vorgesehen ist, auf einer gemeinsamen Welle angeordnet sein.

Gemäß einer weiteren Ausgestaltung der Erfindung ist vorgesehen, dass die Klappen so ausgebildet und angeordnet sind, dass in einer 0 Grad Stellung beide Klappen geschlossen sind, in einer 75 Grad Stellung die Schenkelklappe voll geöffnet und die Trommelklappe geschlossen ist und dass in einer 150 Grad Stellung die Schenkelklappe geschlossen und die Trommelklappe geöffnet ist. Zwischen diesen Winkelpositionen ergeben sich dann entsprechende Übergangspositionen der Öffnungsgrade der Klappen. So ist beispielsweise die Schenkelklappe in einer Stellung zwischen 0 und 75 Grad teilweise geöffnet. In entsprechender Weise ist die Trommelklappe in einer Stellung zwischen 75 Grad und 150 Grad teilweise geöffnet,

Auf diese Weise ist trotz gemeinsamer Steuerung der beiden Klappen eine differierende Steuerung der beiden Luftströme möglich.

Die erfindungsgemäße Anlage bietet eine gewünschte und gegebenenfalls differierende Steuerung zweier Luftströme bei möglichst geringem baulichen Aufwand. Eine derartige Anlage ist vorteilhaft in einem Fahrzeugklimagerät einsetzbar, beispielsweise zur Steuerung eines Defrost- und eines Diffus-Luftstroms, für deren Steuerung ohne Einsatz der erfindungsgemäßen Anlage gesonderte Antriebe erforderlich wären.

Nachfolgend wird ein Ausführungsbeispiel anhand der Zeichnungen näher erläutert. Es zeigen:
Fig, 1 eine schematische Darstellung einer erfindungsgemäßen Anlage zur Steuerung zweier Luftströme mit einer Schenkelklappe und einer Trommelklappe, jeweils in Schnittdarstellung und
Fig. 2 ein Diagramm der Öffnungsgrade der beiden Klappen gemäß Fig. 1 in den verschiedenen Winkelstellungen.
Fig. 3 zeigt schematisch die Anordnung der Trommelklappe und der Schenkelklappe auf einer Welle.

Die Figur 4 zeigt schematisch ein Klimagehäuse eines Klimageräts mit darin eingebauten Elementen.

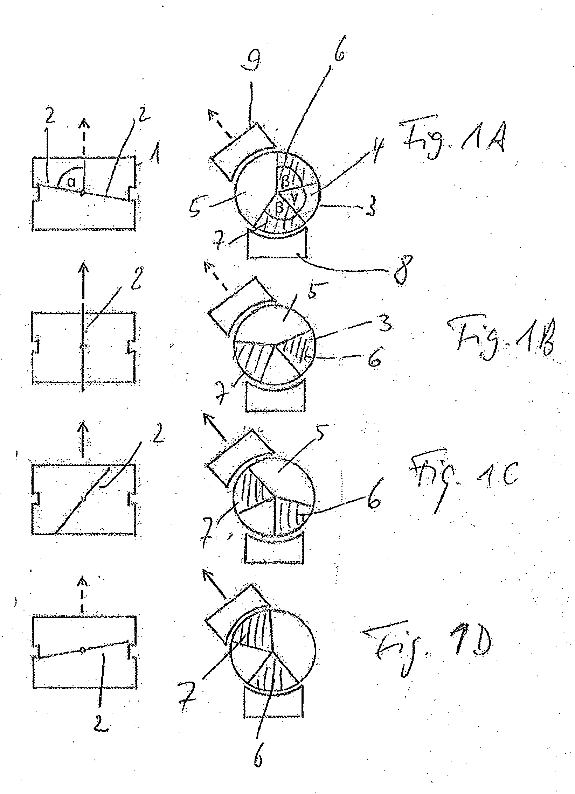

Fig. 1 zeigt eine erfindungsgemäße Anlage zur Steuerung wenigstens zweier Luftströme mittels einer Schenkelklappe und einer Trommelklappe. In der Darstellung gemäß Fig. 1 sind diese beiden Klappen jeweils in Schnittdarstellung und für vier verschiedene Winkelstellungen dargestellt.

Fig. 1A zeigt links einen Luftführungskanal 1, in dem eine Schenkelklappe 2 dargestellt ist. Die Darstellung gemäß Fig. 1A zeigt die Schenkelklappe 2 in ihrer Ruhestellung, in der sie geschlossen ist, indem also der durch den Luftleitkanal 1 zu führende, in Pfeilrichtung strömende Luftstrom die Drosselklappe 2 nicht passieren kann.

Fig. 1A zeigt ferner rechts eine Trommelklappe 3, welche geschlossene Bereiche 4 und 5 aufweist, die sich etwa gegenüberliegen. Durch diese Bereiche kann keine Luft geführt werden. Ferner weist die Trommelklappe 3 luftführende Bereiche 6 und 7 auf, die sich auch etwa einander gegenüberliegen und durch die im Gegensatz zu den Bereichen 4 und 5 Luft führbar ist.

Die Trommelkappe 3 ist in einem Luftleitkanal angeordnet, von dem in der Fig. 1 eine Einlassöffnung 8 sowie eine Auslassöffnung 9 angedeutet sind.

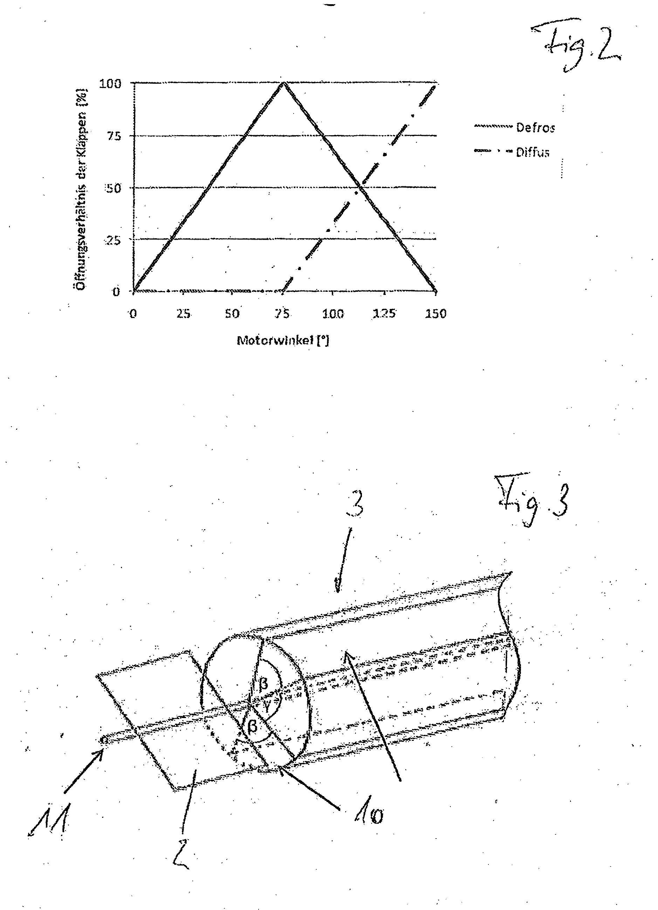

In Fig 1A sind ferner die Öffnungswinkel α und β angedeutet. Die Schnittdarstellung der Schenkelklappe 2 zeigt den Öffnungswinkel α, welcher der Öffnungswinkel zwischen dem geschlossenen und dem voll geöffneten Zustand der Schenkelklappe 2, wie er in gemäß Fig. 2B dargestellt ist, andeutet. In entsprechender Weise ist in der rechten Darstellung der Fig. 1A der Öffnungswinkel β der Trommelklappe 3 angedeutet. Dabei handelt es sich um die offenen Bereiche 6 und 7 der Trommelklappe, die für Luft durchlässig gestaltet sind.

Die Darstellung gemäß Fig. 1A zeigt die Schenkelklappe 2 sowie die Trommelklappe 3 in ihrer Ruhestellung; diese Stellung wird im Folgenden als 0 Grad Winkelstellung bezeichnet.

In dieser Stellung ist die Schenkelklappe 2 geschlossen. In entsprechender Weise ist die Trommelklappe 3 so positioniert, dass der geschlossene Bereich 5 die Auslassöffnung 9 versperrt, so dass die Trommelklappe 3 insgesamt den Luftstrom sperrt.

Die Schenkelklappe 2 sowie die Trommelklappe 3 sind einer -in der Figur 1 nicht angedeuteten- Weise gemeinsam derart angetrieben, dass sie jeweils um die gleiche Winkelstellung bewegt werden.

Dies wird anhand der Darstellung gemäß Fig. 1B deutlich, die die Schenkelklappe 2 um 75 Grad im Uhrzeigersinn relativ zu der Darstellung gemäß Fig. 1A gedrehter Position zeigt. In dieser Position ist die Schenkelklappe 2 vollständig geöffnet. Die Fig. 1B zeigt die Trommelklappe 3 um den gleichen Winkelwert gedreht, also um 75 Grad im Uhrzeigersinn. Auch in dieser Position versperrt der geschlossene Bereich 5 weiterhin vollständig die Auslassöffnung 9 der Anordnung. Somit ist bei einer Winkelstellung von 75 Grad entsprechend der Darstellung gemäß Fig. 1B der Luftleitkanal 1 durch die entsprechende Stellung der Schenkelklappe 2 für den Luftstrom voll geöffnet. Hingegen ist der Luftstrom durch die Einlassöffnung 8 sowie die Auslassöffnung 9 durch die Trommelklappe 3 vollständig verschlossen.

Fig. 1C zeigt eine Darstellung entsprechend den Fig. 1A und 1B, wobei jedoch sowohl die Schenkelklappe 2 wie auch die Trommelklappe 3 weiter im Uhrzeigersinn gedreht wurden und sich gegenüber der Ruheposition entsprechend der Darstellung gemäß Fig. 1A in einer Winkelstellung von etwa 112,5 Grad befinden.

Die Darstellung gemäß Fig. 1C zeigt, dass die Schenkelklappe 2 nicht mehr voll geöffnet ist, sondern nunmehr den Luftleitkanal 1 durchströmenden Luftstrom bremst und gegenüber der voll geöffneten Stellung etwa ein Öffnungsverhältnis von nur noch 50% aufweist.

In der Darstellung gemäß Fig. 1C ist die Trommelklappe 3 um den gleichen Winkelwert gegenüber der Ruheposition gedreht. Nunmehr überdecken die für Luft durchlässigen Bereiche 6 und 7 teilweise die Lufteiniassöffnung 8 und die Luftauslassöffnung 9, so dass zwischen diesen in Teilbereichen Luft zirkulieren kann. Auch hier beträgt das Öffnungsverhältnis im Vergleich zur voll geöffneten Stellung etwa 50%.

Fig. 1D zeigt eine Darstellung entsprechend den Fig. 1A-C, jedoch in einer 150 Grad Winkelstellung gegenüber der Ruheposition gemäß Fig. 1A.

Die Darstellung gemäß Fig. 1D zeigt, dass die Schenkolklappe nunmehr im Uhrzeigersinn so weit gedreht wurde, dass sie wiederum schließt. Die Trommelklappe 3 wurde gegenüber der Darstellung gemäß Fig. 1A um den gleichen Winkelwert gedreht. Nunmehr liegen die für Luft durchlässigen Bereiche 7 und 8 im Bereich der Lufteinlassöffnung 8 und der Luftauslassöffnung 9, so dass der Luftstrom die Trommelklappe 3 im Wesentlichen ungehindert passieren kann, was einem Öffnungsgrad von 100% entspricht.

Fig. 1 zeigt die beiden Klappen in vier exemplarischen, verschiedenen Winkelpositionen. Die Klappen 2 und 3 können in beliebige Positionen zwischen diesen in der Fig. 1 dargestellten Winkelpositionen gefahren werden, wobei dann die Öffnungsverhältnisse sich entsprechend verändern. Dieses ist in Fig. 2 in Form eines Diagramms angedeutet.

In Fig. 2 ist in Form eines Diagramms der öffnungswinkel von 0 bis 100% über der Winkelstellung der Klappen 2 und 3 von 0 bis 150 Grad aufgetragen.

In dem Diagramm ist eine durchgezogene Linie eingetragen, die das Öffnungsverhältnis der Schenkelklappe 2 der Anlage gemäß Fig. 1 andeutet. In entsprechender Weise deutet eine strichpunktierte Linie das Öffnungsverhältnis der Trommelklappe 3 der Anlage gemäß Fig. 1 an

Das Diagramm gemäß Fig. 2 zeigt, dass bei der Winkelstellung von 0 Grad beide Klappen 2 und 3 geschlossen sind, das Öffungsverhältnis für beide Klappen also 0% beträgt. Dies entspricht der Darstellung gemäß Fig. 1A.

Fig. 2 zeigt ferner, dass bei einer Winkelstellung von 75 Grad die Schenkelklappe voll geöffnet ist, also ihr Öffnungsverhältnis 100% beträgt. Bei dieser Winkelstellung ist die Trommelklappe 3 immer noch geschlossen, so dass ihr Öffnungsverhältnis 0% beträgt Dies entspricht der Stellung der Klappen 2 und 3 gemäß Fig. 1B.

Fig. 2 zeigt, dass für Winkelstellungen zwischen 0 Grad und 75 Grad das Öffnungsverhältnis der Schenkelklappe 2 entsprechend der eingestellen Winkelstellung von 0% auf 100% zunimmt, dass also durch Veränderung der Winkelstellung der Schenkelklappe 2 in diesem Bereich der sie durchströmende Luftleitstrom zwischen 0 und 100% gesteuert werden kann. Die Trommelklappe 3 hingegen bleibt in diesem Winkelbereich vollständig geschlossen

Fig. 2 zeigt ferner, dass bei einer WinKelstellung von etwa 112,5 Grad beide Klappen 2 und 3 ein Öffnungsverhältnis von etwa 50% aufweisen. Dies entspricht der Darstellung gemäß Fig. 1C.

Fig. 2 deutet ferner an, dass bei einer End-Winkelstellung von 150 Grad die Schenkelklappe 2 wiederum voll geschlossen und die Trommelklappe 3 voll geöffnet ist. Dies entspricht der Darstellung gemäß Fig. 1D.

In dem Winkelstellungsbereich von 75 Grad bis 150 Grad verändert sich das Öffnungsverhältnis der Schenkelklappe 2 von 100% auf 0%; hingegen verändert sich das Öffnungsverhältnis der Trommelklappe 3 in diesem Bereich von 0% auf 100%. Die Darstellung gemäß Fig. 2 zeigt, dass bei entsprechender Wahl der Winkelstellung in dem Bereich von 75 Grad bis 150 Grad beide Luftströme kontinuierlich in gewünschter Weise beeinflusst werden können, dass also kontinuierlich zwischen vollständigem Schließen der jeweiligen Klappe und vollständigem Öffnen der Klappe mit beliebigen Zwischenpositionen gewählt werden kann.

Somit ermöglicht es die erfindungsgemäße Anlage, zwei Luftströme mittels der Schenkelklappe 2 und der Trommelklappe 3 jeweils kontinuierlich und in gewünschter Weise mit, soweit gewünscht, voneinander abweichenden Öffnungsgraden zu steuern, obwohl beide Klappen mittels eines gemeinsamen Antriebs bewegt werden. Dies deutet auch die Fig. 2 an, die zeigt, dass die Öffnungsverhältnisse beider Klappen je nach Winkelstellung differieren und auch untereinander bei fast allen Winkelstellungen verschieden sind.

Eine derartige Anlage zur Steuerung zweier Luftströme kann vorteilhaft beispielsweise in einem Fahrzeug für ein Klimagerät eingesetzt werden, bei der beispielsweise ein Diffus-Luftstrom sowie ein Defrost-Luftstrom zu steuern sind. Um den wirtschaftlichen Aufwand gering zu halten, ist für beide dafür vorgesehene Klappen eine gemeinsame Steuerung vorgesehen. In dem vorliegenden Beispiel kann ein Defrost-Luftstrom mittels der Schenkelklappe 2 und ein Diffus-Luftstrom mittels der Trommelklappe 3 gesteuert werden.

Die Figur 3 zeigt schematisch eine Anordnung der Trommelklappe 3 mit einer Schenkelklappe 2 vorzugsweise für den Defrost- und/oder Diffusauslasskanal mit einer gemeinsamen Welle 11. Dabei sind auch die Öffnungen 10 der Trommelklappe 3 zu erkennen.

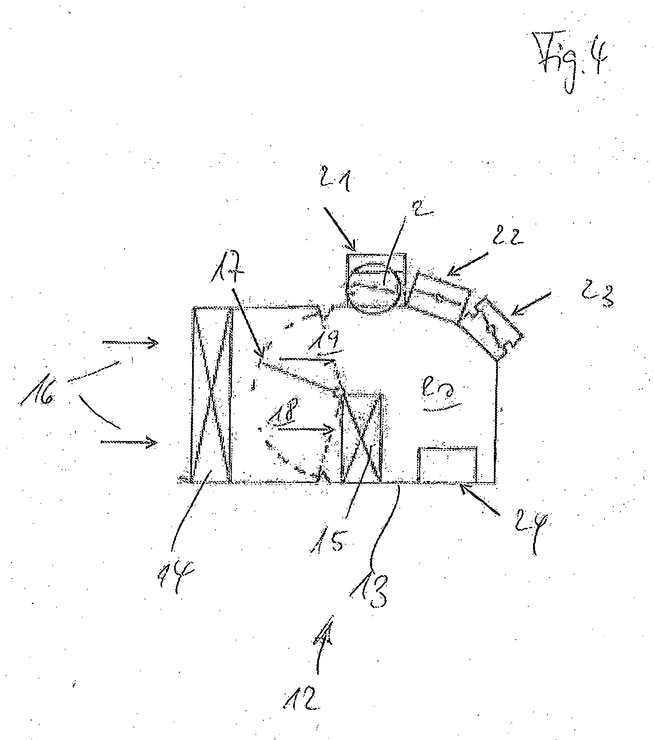

Die Figur 4 zeigt schematisch ein Klimagerät 12 mit Gehäuse 13, in welchem ein Verdampfer 14, ein Heizkörper 15 angeordnet ist. Der Strömungsweg über den Verdampfer wird mit 16 gekennzeichnet. Zur Mischung von warmer Luft im Warmweg 18 und kalter Luft im Kaltweg 19 ist eine Mischklappe 17 vorgesehen, welche im Mischraum 20 gemischt wird. Als Auslässe werden die Defrostdüse 21 mit Schenkelklappe 2 dargestellt. Weiterhin sind Düsen 22, 23 und 24 dargestellt für den Austritt der Seitendüsen, der Mitteldüsen und des Fußraumaustritts.

### Bezungszeichenliste

- 1: Luftführungskanal
- 2: Schenkelklappe
- 3: Trommelklappe
- 4: geschlossener Bereich
- 5: geschlossener Bereich
- 6: luftführender Bereich
- 7: luftführender Bereich
- 8: Lufteinlassöffnung
- 9: Luftauslassöffnung
- 10: Öffnungen der Trommelklappe
- 11: Welle
- 12: Klimagerät
- 13: Gehäuse
- 14: Verdampfer
- 15: Heizkörper
- 16: Luftweg
- 17: Mischklappe
- 18: Warmweg
- 19: Kaltweg
- 20: Mischraum
- 21: Defrostdüse
- 22: Seitendüse
- 23: Mitteldüse
- 24: Fußraumdüse
- α: Öffnungswinkel
- β: Öffnungswinkel

## Patentansprüche

1. Anlage zur Steuerung wenigstens zweier Luftströme mittels wenigstens einer Schenkelklappe (2) und wenigstens einer Trommelklappe (3), wobei für die Schenkelklappe (2) und die Trommelklappe (3) ein gemeinsamer Antrieb vorgesehen ist, **dadurch gekennzeichnet, dass die** Trommelklappe (3) wenigstens zwei offene luftführende Bereiche (6, 7) aufweist und die offenen, luftführenden Bereiche (6, 7) der Trommelklappe (3) so ausgebildet und angeordnet sind, dass der Öffnungsgrad der Trommelklappe (3) für den sie durchströmenden Luftstrom von dem Öffnungsgrad der Schenkelklappe (2) für den diese durchströmenden Luftstrom in der Mehrzahl der mittels des Antriebs anfahrbaren Winkelpostionen beider Klappen (2, 3) abweicht, wobei die Schenkelklappe (2) und die Trommelklappe (3) derart in einer Weise gemeinsam angetrieben sind, dass sie jeweils um die gleiche Winkelstellung bewegt werden.

2. Anlage gemäß Anspruch 1, **dadurch gekennzeichnet, dass** die beiden Klappen (2, 3) in der Mehrzahl der mittels des Antriebs anfahrbaren Winkelpostionen jeweils differierend große Öffnungen für die Luftströme bieten.

3. Anlage gemäß einem der Ansprüche 1 bis 2, **dadurch gekennzeichnet, dass** die Öffnungswinkel der beiden Klappen (2, 3) gleich groß sind und vorzugsweise etwa 75 Grad betragen.

4. Anlage gemäß einem der Ansprüche 1 bis 3, **dadurch gekennzeichnet, dass** die Winkel zwischen einer Lufteinlass- (8) und einer LuftauslassÖffnung (9) der Trommelklappe (3) größer als der halbe Öffnungswinkel der Schenkelklappe (2, 3) ist.

5. Anlage gemäß einem der Ansprüche 1 bis 4, **dadurch gekennzeichnet, dass** die Klappen (2, 3) auf einer gemeinsamen Welle angeordnet sind.

6. Anlage gemäß einem der Ansprüche 1 bis 5, **dadurch gekennzeichnet, dass** die Klappen (2, 3) so ausgebildet sind, dass
- in einer 0 Grad Winkelstellung beide Klappen (2, 3) geschlossen sind,
- in einer 75 Grad Winkelstellung die Schenkelklappe (2) voll geöffnet und die Trommelklappe (3) geschlossen ist, und
- in einer 150 Grad Winkelstellung die Schenkelklappe (2) geschlossen und die Trömmelklappe (3) voll geöffnet ist,
wobei zwischen diesen Positionen je nach Winkelstellung entsprechende Übergangswerte der Öffnungsgrade eintreten.

7. Fahrzeug-Klimagerät mit einer Anlage zur Steuerung wenigstens zweier Luftströme nach einem der Ansprüche 1 bis 6.

8. Fahrzeug-Klimagerät nach Anspruch 7, **dadurch gekennzeichnet, dass** mittels der Schenkelklappe (2) ein Defrost-Luftstrom und mittels der Trommelklappe (3) ein Diffus-Luftstrom steuerbar ist.

## Claims

1. An assembly for controlling at least two air flows by means of at least one leg flap (2) and at least one drum flap (3), wherein a common drive is provided for the leg flap (2) and the drum flap (3), **characterised in that** the drum flap (3) has at least two open air-guiding regions (6, 7) and the open, air-guiding regions (6, 7) of the drum flap (3) are formed and arranged such that the opening degree of the drum flap (3) for the air flow flowing therethrough deviates from the opening degree of the leg flap (2) for the airflow flowing therethrough in the majority of the angular positions of both flaps (2, 3) settable by means of the drive, wherein the leg flap (2) and the drum flap (3) are commonly driven in such a way that they are respectively moved about the same angular position.

2. The assembly according to claim 1, **characterised in that** the two flaps (2, 3), in the majority of the angular positions settable by means of the drive, each provide openings of different size for the air flows.

3. The assembly according to one of claims 1 to 2, **characterised in that** the opening angles of the two flaps (2, 3) are of equal size and are preferably approximately 75 degrees.

4. The assembly according to one of claims 1 to 3, **characterised in that** the angles between an air inlet opening (8) and an air outlet opening (9) of the drum flap (3) is greater than half the opening angle of the leg flap (2, 3).

5. The assembly according to one of claims 1 to 4, **characterised in that** the flaps (2, 3) are arranged on a common shaft.

6. The assembly according to one of claims 1 to 5, **characterised in that** the flaps (2, 3) are formed such that
- in a 0 degree angular position both flaps (2, 3) are closed,
- in a 75 degree angular position the leg flap (2) is fully opened and the drum flap (3) is closed, and
- in a 150 degree angular position the leg flap (2) is closed and the drum flap (3) is fully opened, wherein corresponding transition values of the opening degrees are applicable between these positions, depending on the angular position.

7. A vehicle air-conditioning device having an assembly for controlling at least two air flows according to one of claims 1 to 6.

8. The vehicle air-conditioning device according to claim 7, **characterised in that** a defrosting air flow can be controlled by means of the leg flap (2) and a diffuse air flow can be controlled by means of the drum flap (3).

## Revendications

1. Système de commande au moins de deux flux d'air au moyen au moins d'un volet à branches (2) et au moins d'un volet à tambour (3), où il est prévu un entraînement commun pour le volet à branches (2) et le volet à tambour (3), **caractérisé en ce que** le volet à tambour (3) présente au moins deux zones ouvertes (6, 7) acheminant l'air, et les zones ouvertes (6, 7) du volet à tambour (3), qui acheminent l'air, sont configurées et disposées de telle sorte que, dans la plupart des positions angulaires des deux volets (2, 3) pouvant être prises au moyen de l'entraînement, le degré d'ouverture du volet à tambour (3) pour le flux d'air traversant ledit volet à tambour diffère du degré d'ouverture du volet à branches (2) pour le flux d'air traversant ledit volet à branches, où le volet à branches (2) et le volet à tambour (3) sont entraînés de façon conjointe, de manière telle qu'ils soient déplacés respectivement suivant la même position angulaire.

2. Système selon la revendication 1, **caractérisé en ce que** les deux volets (2, 3), dans la plupart des positions angulaires pouvant être prises au moyen de l'entraînement, offrent, pour les flux d'air, de grandes ouvertures qui diffèrent à chaque fois.

3. Système selon l'une des revendications 1 à 2, **caractérisé en ce que** les angles d'ouverture des deux volets (2, 3) sont de grandeur identique et sont, de préférence, à peu près égaux à 75 degrés.

4. Système selon l'une quelconque des revendications 1 à 3, **caractérisé en ce que** les angles formés entre une ouverture d'entrée d'air (8) et de sortie d'air (9) du volet à tambour (3) sont supérieurs à la moitié de l'angle d'ouverture du volet à branches (2, 3) .

5. Système selon l'une quelconque des revendications 1 à 4, **caractérisé en ce que** les volets (2, 3) sont disposés sur un arbre commun.

6. Système selon l'une quelconque des revendications 1 à 5, **caractérisé en ce que** les volets (2, 3) sont conçus de telle sorte que,
- dans une position angulaire de 0 degré, les deux volets (2, 3) sont fermés,
- dans une position angulaire de 75 degrés, le volet à branches (2) est complètement ouvert et le volet à tambour (3) fermé, et
- dans une position angulaire de 150 degrés, le volet à branches (2) est fermé et le volet à tambour (3) complètement ouvert,
il en résulte, entre ces positions, des valeurs transitoires des degrés d'ouverture, ces valeurs correspondant à chaque fois à une position angulaire.

7. Climatiseur d'un véhicule comprenant un système de commande au moins de deux flux d'air selon l'une quelconque des revendications 1 à 6.

8. Climatiseur d'un véhicule selon la revendication 7, **caractérisé en ce qu'**un flux d'air de dégivrage est réglable au moyen du volet à branches (2), un flux d'air diffus étant réglable au moyen du volet à tambour (3).
